(19)

Europäisches
Patentamt

European
Patent Office

Office européen
des brevets

(11) **EP 2 799 911 A1**

(12) **EUROPEAN PATENT APPLICATION**
published in accordance with Art. 153(4) EPC

(43) Date of publication:
**05.11.2014 Bulletin 2014/45**

(21) Application number: **12863225.4**

(22) Date of filing: **19.12.2012**

(51) Int Cl.:
*G01T 1/20* (2006.01)     *G01T 1/161* (2006.01)

(86) International application number:
**PCT/JP2012/008129**

(87) International publication number:
**WO 2013/099162 (04.07.2013 Gazette 2013/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2011   JP 2011289480**

(71) Applicants:
• **Waseda University
Tokyo 169-8050 (JP)**
• **Furukawa Co., Ltd.
Chiyoda-ku
Tokyo 100-8370 (JP)**

(72) Inventors:
• **KATAOKA, Jun
Shinjuku-ku, Tokyo 169-8050 (JP)**
• **KISHIMOTO, Aya
Shinjuku-ku, Tokyo 169-8050 (JP)**
• **KAMADA, Kei
Tsukuba-shi, Ibaraki 305-0856 (JP)**

(74) Representative: **Schollweck, Susanne
ZSP Patentanwälte
Partnerschaftsgesellschaft
Radlkoferstrasse 2
81373 München (DE)**

(54) **RADIATION DETECTOR**

(57)     A radiation detector (1) includes a three-dimensional stacked scintillator (12) that includes a plurality of scintillator blocks (13) arranged in a matrix in a three-dimensional manner so as to form a prism, in which interposed layers (15) which have a refractive index different from a refractive index of the scintillator blocks (13) and/or have a characteristic of absorbing or scattering some of light emitted by the scintillator blocks are disposed, out of boundary surfaces between the plurality of scintillator blocks (13), on the boundary surfaces extending in a direction perpendicular to a height direction H of the prism, and light blocking layers (14) which block transmission of light emitted by the scintillator are disposed on at least some of the boundary surfaces extending in a direction parallel to the height direction of the prism.

FIG. 1

EP 2 799 911 A1

## Description

TECHNICAL FIELD

The present invention relates to a radiation detector.

BACKGROUND ART

A radiation detector is used in nuclear medicine imaging apparatuses such as, for example, positron emission tomography (PET), single photon emission computed tomography (SPECT), and a gamma camera. The nuclear medicine apparatuses are apparatuses which use a property in which annihilation gamma rays are emitted when a positron radioactive isotope (RI) labeling agent is administered to a subject, and use a radiation detector so as to detect annihilation gamma rays, thereby obtaining an RI distribution image of the subject.

Here, in the radiation detector used in the foregoing application, a technique for detecting a light emitting position in a depth direction (length direction) of the radiation detector is desired in order to realize further improvement in a spatial resolution.

Patent Document 1 discloses the following three-dimensional radiation incidence position detector. The three-dimensional radiation incidence position detector includes a plurality of pillar-shaped scintillators and light receiving elements connected to respective bottom surfaces of the plurality of pillar-shaped scintillators. In the plurality of pillar-shaped scintillators, a plurality of scintillator cells having a predetermined shape are vertically piled up. The plurality of pillar-shaped scintillators are arranged in such a way that their side surfaces are adjacent to each other. Some of the side surfaces adjacent to each other are provided with reflection sheets, and some of the side surfaces of at least the uppermost-stage scintillator cells are not provided with the reflection sheets so that light comes and goes mutually. In addition, the three-dimensional radiation incidence position detector uses a photomultiplier tube as the light receiving element. Further, the light receiving elements are provided on only one side of the structure in which the plurality of scintillator cells are vertically piled up.

Patent Document 2 discloses the following radiation position detector. In the radiation position detector, scintillator elements are arranged in a three-dimensional manner so as to form an approximate rectangular solid block. In addition, light receiving elements are connected to two or more surfaces of the approximate rectangular solid, for example, all the surfaces thereof. In other words, the technique is intended for diffusing light emitted from the scintillator elements in a three-dimensional manner.

Patent Document 3 discloses the following radiation detector. The radiation detector includes a scintillator crystal, a photodetector, and an optical attenuating section. The scintillator crystal is formed in an elongated shape, and radiation is incident on one end thereof. The photodetector is disposed at the other end of the scintillator crystal, and detects intensity of fluorescence. The optical attenuating section is partially located on an outside surface of the scintillator crystal, and attenuates intensity of fluorescence which propagates through the scintillator crystal. The radiation detector uses a photomultiplier tube as the photodetector. In addition, the photodetector is provided only at one end of the scintillator crystal.

Patent Document 4 discloses the following three-dimensional radiation position detecting device. The three-dimensional radiation position detecting device includes a scintillator unit and a light receiving element. The scintillator unit is obtained by overlapping a plurality of scintillator cells in a layer form, inserting thin transparent plates having a refractive index different from that of the scintillator cells between the scintillator cells so as to form a multilayer scintillator, and parallelly arranging two multilayer scintillators and inserting a thin transparent plate partially containing a reflecting material between both scintillators so as to bond all of them. The light receiving element is connected to one end of the multilayer scintillator.

Patent Document 5 discloses a radiation position detector in which plate-shaped or pillar-shaped scintillators are coupled to photodetectors. The radiation position detector detects an incidence position of radiation on the scintillator and a depth position of a light emitting point in the scintillator, by bundling scintillators in many layers and optically coupling the layers.

Patent Document 6 discloses a three-dimensional radiation position detector in which a plurality of scintillator elements are stacked on a light position detector so that central positions thereof are deflected in a direction parallel to a light receiving surface of the light position detector, and centroid positions of spatial distributions of output light from the light position detector are made different for each stacked scintillator element, thereby identifying a scintillator element generating fluorescence by incidence of radiation on the basis of a centroid position operation. In addition, the essence of the technique is in stacking first and second scintillator arrays having different fluorescence decaying time constants.

Patent Document 7 discloses the following three-dimensional radiation position detector. The three-dimensional radiation position detector includes a scintillator unit, a light receiving element, and an operation part. The scintillator unit is provided on a light incidence plane of the light receiving element and is constituted by sequentially stacking four scintillator arrays in a direction perpendicular to the light incidence plane. Each of the scintillator arrays is constituted by two-dimensionally arranging $8\times8$ scintillator cells. In addition, the optical condition of at least one side plane of a scintillator cell included in a scintillator array of a certain layer is different from the optical condition of the same side plane of a scintillator cell included in a scintillator array of another layer.

Another related technique is disclosed in Non-Patent Document 1. In addition, Non-Patent Document 1 discloses that a position resolution in the related art is about 1 mm.

RELATED DOCUMENT

PATENT DOCUMENT

[Patent Document 1] Japanese Unexamined Patent Publication No. H11(1999)-142523
[Patent Document 2] Japanese Unexamined Patent Publication No. 2011-149883
[Patent Document 3] Japanese Unexamined Patent Publication No. 2009-31132
[Patent Document 4] Japanese Unexamined Patent Publication No. S63(1988)-47686
[Patent Document 5] Japanese Examined Patent Publication No. H5(1993)-75990
[Patent Document 6] Japanese Unexamined Patent Publication No. 2003-21682
[Patent Document 7] Japanese Unexamined Patent Publication No. 2004-279057

NON-PATENT DOCUMENT

[Non-Patent Document 1] National Institute of Radiological Sciences, "Development of three-dimensional radiation detector for realizing PET resolution approaching theoretical limit", Online, Retrieved on December 7, 2011, Internet URL: http://www.nirs.go.jp/information/press/2011/10_05.shtml

DISCLOSURE OF THE INVENTION

A position resolution in a scintillator depth direction is not sufficient in any related art. In addition, many problems to be solved, such as assembly being difficult due to a complex structure and a waveform acquisition circuit or a reading circuit being complex, still remain in realizing mass production as a device.
An object of the present invention is to provide a radiation detector which realizes a higher position resolution in a scintillator depth direction than in the related art, with a relatively simple structure.
According to the present invention, there is provided a radiation detector including a three-dimensional stacked scintillator that includes a plurality of scintillator blocks arranged in a matrix in a three-dimensional manner so as to form a prism, in which interposed layers which have a refractive index different from a refractive index of the scintillator blocks and/or have a characteristic of absorbing or scattering some light emitted by the scintillator blocks are disposed on, out of boundary surfaces between the plurality of scintillator blocks, the boundary surfaces extending in a direction perpendicular to a height direction of the prism, and light blocking layers which block transmission of light emitted by the scintillator blocks are disposed on at least some of the boundary surfaces extending in a direction parallel to the height direction of the prism; and light receiving elements that are provided so as to form a pair on both end surfaces of the prism of the three-dimensional stacked scintillator in the height direction, and receive light emitted by the scintillator blocks so as to convert the light into electrical signals.
According to the present invention, it is possible to provide a radiation detector which realizes a higher position resolution in a scintillator depth direction than in the related art, with a relatively simple structure.

BRIEF DESCRIPTION OF THE DRAWINGS

The above-described object, and other objects, features and advantages will become apparent from preferred embodiments described below and the following accompanying drawings.

FIG. 1 is a diagram schematically illustrating an example of a configuration of a radiation detector of the present embodiment.
FIG. 2 is a diagram illustrating an extracted part of a three-dimensional stacked scintillator.
FIG. 3 is a diagram illustrating an extracted part of a three-dimensional stacked scintillator.
FIG. 4 is an example of a functional block diagram of a position specifying unit.
FIG. 5 is a diagram schematically illustrating a configuration of a part of the radiation detector of the present embodiment.

FIG. 6 is a diagram illustrating an effect of the radiation detector of the present embodiment.

FIG. 7 is a diagram schematically illustrating an example of a configuration of the radiation detector of the present embodiment.

FIG. 8 is a diagram illustrating an effect of the radiation detector of the present embodiment.

FIG. 9 is a diagram illustrating an effect of the radiation detector of the present embodiment.

FIG. 10 is a diagram schematically illustrating an example of a configuration of the radiation detector of the present embodiment.

FIG. 11 is a diagram illustrating an effect of the radiation detector of the present embodiment.

FIG. 12 is a diagram illustrating data of Comparative Example 1.

FIG. 13 is a diagram illustrating data of Comparative Example 1.

FIG. 14 is a diagram illustrating data of Comparative Example 2.

FIG. 15 is a diagram illustrating data of Comparative Example 2.

## DESCRIPTION OF EMBODIMENTS

Hereinafter, an embodiment of the present invention will be described with reference to the drawings. In addition, the same constituent elements are given the same reference numerals throughout all the drawings, and the detailed description thereof will not be repeated.

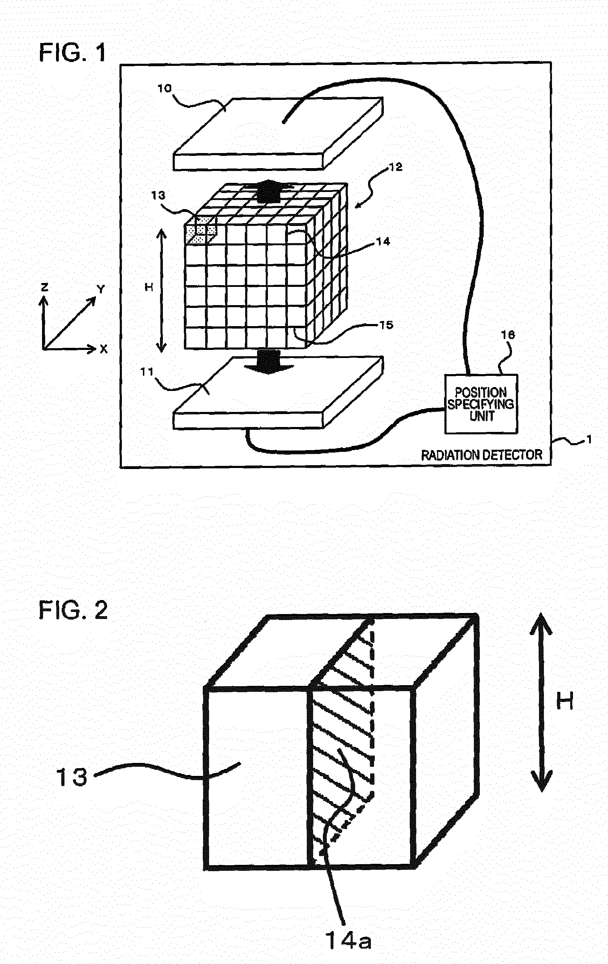

FIG. 1 schematically illustrates a configuration of a radiation detector 1 of the present embodiment. As illustrated in FIG. 1, the radiation detector 1 includes a three-dimensional stacked scintillator 12, light receiving elements 10 and 11, and a position specifying unit 16. Although the light receiving element 10 and the light receiving element 11 are separated from the three-dimensional stacked scintillator 12 in FIG. 1, the light receiving element 10 and the light receiving element 11 are optically coupled to the three-dimensional stacked scintillator 12 in practice. In addition, the radiation detector 1 of the present embodiment may not include the position specifying unit 16. In other words, the position specifying unit 16 may be provided in another device, and the device and the radiation detector 1 may be connected to each other. Hereinafter, each constituent element will be described.

In the three-dimensional stacked scintillator 12, a plurality of scintillator blocks 13 are arranged in a matrix in a three-dimensional manner so as to form a prism.

First, the scintillator block 13 will be described. A material of the scintillator block 13 is not limited as long as the material absorbs radiation and emits light, and all materials may be selected according to techniques regarding the scintillator of the related art.

The scintillator block 13 may have a prism shape, and may have a cube shape, a polygonal prism shape whose bottom surface has a polygonal shape, a columnar shape, prisms whose bottom surfaces have other shapes, and the like, in addition to the illustrated rectangular solid.

A size of the scintillator block 13 is preferably small from the viewpoint of improving a position resolution. For example, an upper limit of the height (the z direction of FIG. 1) may be 50 mm, and an upper limit of a long diameter of the bottom surface (the surface parallel to the x-y plane of FIG. 1) may be 50 mm.

In addition, in the present embodiment, a plurality of scintillator blocks 13 with the same configuration (in material, shape, size, and the like) may be stacked so as to form the three-dimensional stacked scintillator 12. For this reason, the radiation detector according to the present embodiment has superior mass productivity.

Next, the three-dimensional arrangement will be described.

First, the plurality of scintillator blocks 13 are stacked linearly in the height direction (the z direction (H direction) illustrated in FIG. 1) of the three-dimensional stacked scintillator (prism) 12. In other words, it can be said that the three-dimensional stacked scintillator 12 has a configuration in which the plurality of scintillator blocks 13 are arranged linearly in the z direction (refer to FIG. 1) (hereinafter, referred to as a "z direction stacked unit"), and a plurality of z direction stacked units are arranged in parallel in the x direction and the y direction (refer to FIG. 1). When the z direction stacked units are observed from the z direction (refer to FIG. 1), the plurality of scintillator blocks 13 almost completely overlap each other. In addition, slight deviation is not a problem, and the term "almost completely" is a concept including this state.

In addition, the plurality of scintillator blocks 13 are preferably arranged so that gaps in the x direction and gaps in the y direction are as small as possible. From this viewpoint, a shape of the scintillator block may be a polygonal prism such as a triangular prism, a quadrangular prism, and a hexagonal prism. Further, bottom surfaces and upper surfaces of the prisms are preferably arranged so as to be parallel to the x-y plane.

The plurality of scintillator blocks 13 may not be necessarily arranged linearly in the x direction and the y direction (refer to FIG. 1). In addition, the plurality of z direction stacked units may be deviated from each other in the z direction. In other words, respective positions of ends of the plurality of z direction stacked units in the z direction may be deviated from each other. However, as illustrated in FIG. 1, preferably, the plurality of scintillator blocks 13 are regularly arranged so as to be in a straight line in all of the x direction, the y direction, and the z direction, and so that respective positions of the ends of the plurality of z direction stacked units in the z direction are aligned. In this case, a structure of the three-dimensional stacked scintillator 12 is simplified and thus has good mass productivity.

The number of the plurality of scintillator blocks 13 arranged in the three-dimensional manner is not particularly limited. For example, the scintillator blocks 13 of two or more and 1000 or fewer may be stacked linearly in the z direction so as to form the z direction stacked unit, and the z direction stacked units of four or more and 10000000000 or fewer may be arranged so as to be placed side by side in the x direction and the y direction.

Here, as illustrated in FIG. 1, the three-dimensional stacked scintillator 12 includes interposed layers 15 and light blocking layers 14 on boundary surfaces (hereinafter, referred to as "scintillator block boundary surfaces") between the plurality of scintillator blocks 13.

The light blocking layer 14 has a function of blocking (absorbing and/or reflecting) light emitted by the scintillator (the scintillator blocks 13) from being transmitted. In addition, the light blocking layer 14 preferably has a function of reflecting light emitted by the scintillator. A configuration of the light blocking layer 14 is not particularly limited as long as the light blocking layer has this function. For example, the light blocking layer 14 may be configured to include a light reflection film. The light reflection film used in the light blocking layer 14 preferably has high light reflectance, and may be, for example, a fluororesin film, a film containing a light reflection material such as barium sulfate, an ESR film, and the like. Further, the light blocking layer 14 may be formed by an adhesive containing a light reflection material such as barium sulfate or titanium oxide.

Among the scintillator block boundary surfaces, the light blocking layers 14 are located on at least some of boundary surfaces 14a (refer to FIG. 2) which extend in a direction parallel to the height direction H of the three-dimensional stacked scintillator 12 (prism). For example, the light blocking layers 14 may be provided on all of the boundary surfaces 14a (refer to FIG. 2) which extend in the direction parallel to the height direction H. In addition, examples in which the light blocking layers 14 are located on some of the boundary surfaces 14a (refer to FIG. 2) may include a case where the light blocking layers 14 are located on some of the boundary surfaces 14a between two scintillator blocks 13, a case where the light blocking layers 14 are located on all of the boundary surfaces 14a between first and second scintillator blocks 13 and the light blocking layers 14 are not located on the boundary surfaces 14a between third and fourth scintillator blocks 13, and a combination thereof. Further, along with being located on at least some of the boundary surfaces 14a, the light blocking layers 14 may be located on at least a part of side surfaces (outer circumferential surface) of the three-dimensional stacked scintillator 12, for example, entirely located so as to cover at least a part of the side surfaces of the three-dimensional stacked scintillator 12, for example, entirely cover the side surfaces.

The light blocking layer 14 prevents light emitted from the first scintillator block 13 included in the first z direction stacked unit from being diffused in the x direction and the y direction (refer to FIG. 1) and entering other scintillator blocks 13 included in other z direction stacked units or leaking to an external space. As a result, a position resolution in the x direction and the y direction is improved. In addition, in a case where the light blocking layer 14 includes a light reflection material, the light blocking layer 14 has not only the above-described function but also a function of guiding light emitted from the first scintillator block 13 included in the first z direction stacked unit in the z direction (refer to FIG. 1). As a result, the light emitted from the scintillator can efficiently reach the light receiving elements 10 and 11 located at both ends of the z direction stacked unit in the height direction H (z direction). From these viewpoints, the light blocking layers 14 are preferably provided on all of the boundary surfaces 14a (refer to FIG. 2) extending in the direction parallel to the height direction H. However, even if the light blocking layer is partially provided, the operation and effect are achieved although there is a difference in a degree from the case of being entirely provided.

The interposed layer 15 has a refractive index different from that of the scintillator block 13, and/or has a characteristic of absorbing or scattering of some of light emitted by the scintillator. In addition, the interposed layer 15 is not particularly limited as long as the interposed layer has such a characteristic, and has a degree of freedom in its configuration (in material, thickness, and the like). For example, the interposed layer 15 may be a gas such as air, a liquid such as water, grease, or fat and oil, or a solid such as glass, polyethylene, an epoxy-based adhesive, or a silicon-based adhesive. Further, the interposed layer 15 may be a combination thereof.

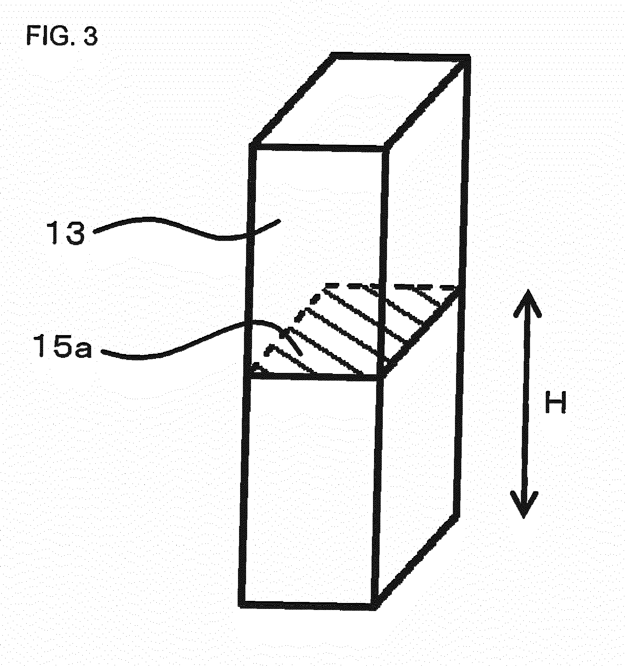

Among the scintillator block boundary surfaces, the interposed layers 15 are located on boundary surfaces 15a (refer to FIG. 3) which extend in a direction perpendicular to the height direction H of the three-dimensional stacked scintillator 12 (prism). In other words, the z direction stacked unit is obtained by arranging the plurality of scintillator blocks 13 linearly in the z direction (refer to FIG. 1) with the interposed layers 15 interposed between the respective scintillator blocks 13.

Here, there are cases where light emitted from the first scintillator block 13 included in the first z direction stacked unit travels over the scintillator blocks 13 until reaching either of the light receiving elements 10 and 11 located at both ends of the z direction stacked unit. When the light travels over the adjacent scintillator blocks 13, the light passes through the interposed layer 15. The interposed layer 15 reduces an amount of the light which passes therethrough further than in a case where the light passes through the scintillator block 13. In other words, the light generated from the scintillator block 13 may undergo a reduction in a light amount due to passing-through of the interposed layer 15 until reaching either of the light receiving elements 10 and 11. After the light is emitted from the first scintillator block 13, an extent of the reduction in a light amount until reaching either of the light receiving elements 10 and 11 increases as the number of times of traveling over the scintillator blocks 13 (the number of times of passing through the interposed layers 15) increases. In addition, the number of times of traveling over the scintillator blocks 13 (the number of times of passing through the interposed layers 15) tends to increase as a distance from a position where light has been emitted to each of the light receiving elements 10 and 11 is increased. For this reason, in a case where distances from the first scintillator block 13 emitting light to the light receiving elements 10 and 11 are different, a difference between an amount of light which has reached the light receiving element 10 and an amount of light which has reached the light receiving element 11 is clearly seen. As a result, there is an improvement in accuracy of a process described below in which the position specifying unit 16 specifies a light emitting position.

Referring to FIG. 1 again, the light receiving elements 10 and 11 receive light emitted by the scintillator (scintillator block 13) and convert the light into electrical signals. The light receiving elements 10 and 11 are provided so as to form a pair on both end surfaces of the three-dimensional stacked scintillator 12 (prism) in the height direction H. In FIG. 1, the light receiving element 10 and the light receiving element 11 are separated from the three-dimensional stacked scintillator 12, but, in practice, the light receiving element 10 and the light receiving element 11 are optically coupled to the three-dimensional stacked scintillator 12. As the light receiving elements 10 and 11, for example, a silicon photomultiplier, a photoelectric converter using a CCD element or the like, a photomultiplier tube, an avalanche photodiode, a photodiode, and the like may be used.

The position specifying unit 16 receives the electrical signals from the two light receiving elements 10 and 11 forming a pair, and specifies a position where the light which provides a basis of the electrical signals has been emitted, on the basis of the received electrical signals.

First, a description will be made of a principle of specifying a position in the depth direction (a position in the z direction) when the position specifying unit 16 specifies a light emitting position.

As described above, in a case of the three-dimensional stacked scintillator 12 of the present embodiment including the light blocking layers 14, light emitted from the first scintillator block 13 is guided so as to be diffused in the z direction (two directions), and thus reaches either of the light receiving elements 10 and 11.

Here, an amount of the light emitted from the first scintillator block 13 is reduced until reaching the light receiving elements 10 or 11 due to influences such as absorption, reflection, and diffusion. An extent of the reduction increases as a distance from the first scintillator block 13 which has emitted the light to the light receiving elements 10 or 11 is increased. In addition, since the interposed layers 15 are present, as described above, an amount of the light emitted from the first scintillator block 13 tends to be reduced as a distance from the first scintillator block 13 which has emitted the light to the light receiving elements 10 or 11 is increased. For this reason, a light receiving amount (a total energy amount of light received by the light receiving elements) of each of the light receiving elements 10 and 11 relatively increases if a position of the first scintillator block 13 which has emitted the light is close, and, conversely, relatively decreases if the position thereof is distant.

The position specifying unit 16 specifies a light emitting position in the depth direction (a position in the z direction of the scintillator block 13 having emitted light) by using the following Equation (1) on the basis of the premise.

```
(Depth position)=(Height of three-dimensional stacked
scintillator 12)×(total energy amount of light incident on light
receiving element 10)/{( total energy amount of light incident on
light receiving element 11)+( total energy amount of light incident
on light receiving element 10)} ---- (1)
```

In addition, a light emitting position in a direction parallel to the x-y plane may be specified according to the related art.

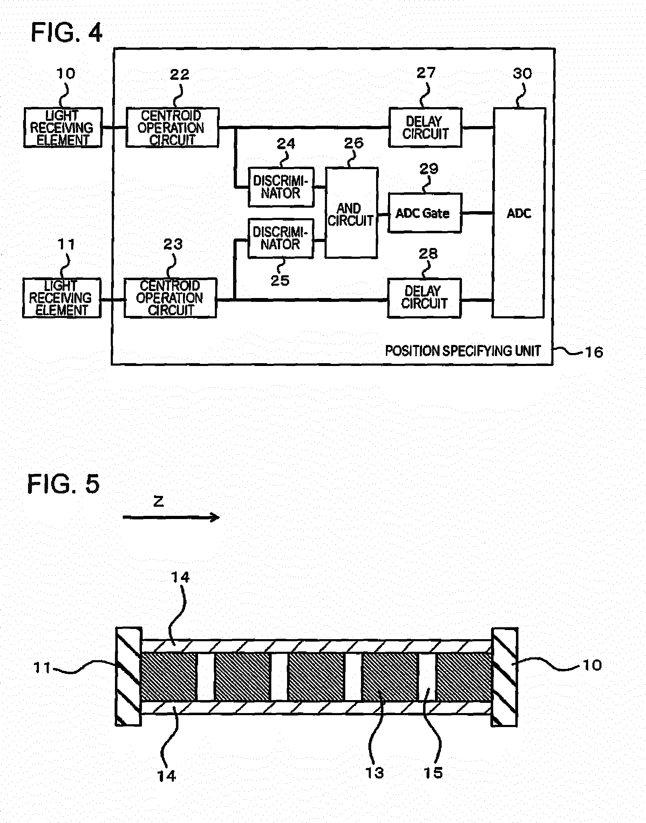

Here, FIG. 4 illustrates an example of a functional block diagram of the position specifying unit 16. Signals output from the light receiving elements 10 and 11 are respectively converted into signals indicating positional information and wave height information in an in-surface direction (x-y plane direction) of the light receiving elements 10 and 11 by centroid operation circuits 22 and 23, and are then branched out. First and second signals of the branched signals are input to an ADC 30 through delay circuits 27 and 28. In addition, third and fourth signals branched out from the centroid operation circuits 22 and 23 pass through discriminators 24 and 25 so as to undergo an AND operation (AND circuit 26), and then generate a gate signal (ADC gate 29). The three signals are synchronized with each other in the ADC 30, thereby removing components other than signals derived from radiation. Positional information in the in-surface direction (x-y plane direction) and the depth direction (z direction) is determined by performing a centroid operation on the signals from the delay circuits 27 and 28, and the energy information is determined on the basis of a sum of the signals from the delay circuits 27 and 28.

In addition, a method of specifying a light emitting position in the depth direction is not limited to Equation (1) and the above-described circuit, and other methods of using a light emitting position and a difference between amounts of light received by the light receiving elements (a total energy amount of light received by the light receiving elements) may be used.

Next, a description will be made of an example of a manufacturing method of the three-dimensional stacked scintillator 12.

<Manufacturing method 1>

First, a plurality of scintillator crystals (scintillator blocks 13) whose surfaces are optically polished and which have a predetermined shape (for example, a cube which is 3 mm long, 3 mm wide, and 3 mm high) are prepared. Then, the scintillator blocks 13 are disposed on and fixed to a glass plate at predetermined intervals (for example, 0.2 mm) in M rows $\times$ N columns (for example, four rows $\times$ four columns). Next, a mixture solution (for example, a mixture solution of barium sulfate, water, an adhesive, and a dispersant) containing a reflection material is dropped at gaps between the plurality of scintillator blocks 13 so as to fill the gaps, in a state in which a circumference of the scintillator block group of M rows $\times$ N columns is surrounded by an enclosure with a predetermined height on the glass plate. Subsequently, the result is heated and solidified (for example, heated and dried in an oven of 50°C for 24 hours) so as to form the light blocking layers 14. At this time, the light blocking layers 14 may be partially formed by performing dropping and filling of the mixture solution after disposing, for example, transparent plates at some of the gaps of the plurality of scintillator blocks 13. Then, the glass plate is peeled off, thereby obtaining a scintillator array in which the scintillator blocks of four blocks $\times$ four blocks, having the light blocking layer 14 which is 0.2 mm thick, are arranged in the x-y plane direction (refer to FIG. 1).

In the same manner, a predetermined number of (for example, four) scintillator arrays are manufactured, and then the plurality of scintillator arrays are stacked so that vertical positions (the z direction of FIG. 1) of the scintillator blocks 13 match each other. When the stacking is performed, the interposed layers 15, which have a refractive index different from that of the scintillator blocks 13 and/or have a characteristic of absorbing or scattering some of light emitted by the scintillator, are provided between the arrays by using air, an adhesive, or the like. In this manufacturing method, the arrays can be simply piled up in air, and, in this way, an air layer of several $\mu$m to several tens of $\mu$m naturally fills the gap between the scintillator arrays due to a limit of surface processing accuracy of the scintillator element. Next, a Teflon (registered trademark) tape reflector is attached to a side surface of the stacked scintillator array for fixation, thereby obtaining the three-dimensional stacked scintillator 12.

Next, the light receiving elements 10 and 11 are optically coupled to both upper and lower surfaces (two surfaces at both ends in the z direction) of the three-dimensional stacked scintillator 12. For example, multi-pixel photon counter (MPPC) arrays which have light receiving elements of four rows $\times$ four columns with a light receiving area of $3 \times 3$ mm2 are adhered to the three-dimensional stacked scintillator 12 by using optical grease.

<Manufacturing method 2>

First, a plurality of scintillator crystals (scintillator blocks 13) whose surfaces are optically polished and which have a predetermined shape (for example, a cube which is 3 mm long, 3 mm wide, and 3 mm high) are prepared. Next, a lattice is manufactured by using, for example, a light reflection film so as to match a shape of the scintillator blocks 13 in the x direction and the y direction (refer to FIG. 1). Subsequently, the scintillator blocks 13 are put inside the lattice so as to be piled up in a predetermined number of layers, thereby manufacturing a stacked array which is stacked in the z direction (refer to FIG. 1). At this time, an adhesive (for example, a light reflection material-containing adhesive) may fill a gap between the scintillator block 13 and the light reflection film (light blocking layer 14) for fixation. In addition, an air layer with a predetermined thickness, an adhesive through which scintillation light is transmitted, or a material of a light transmission plate or the like is disposed between the plurality of scintillator blocks 13 as the interposed layer 15.

In the same manner, a predetermined number of stacked arrays are manufactured and are arranged in parallel, thereby obtaining the three-dimensional stacked scintillator 12. Steps thereof are the same as those in the manufacturing method 1.

<Manufacturing method 3>

First, a plurality of scintillator crystals (scintillator blocks 13) whose surfaces are optically polished and which have a predetermined shape (for example, a cube which is 3 mm long, 3 mm wide, and 3 mm high) are prepared. Next, a plurality of scintillator blocks 13 are stacked in the z direction (refer to FIG. 1) with the interposed layer 15 (an air layer with a predetermined thickness, an adhesive through which scintillation light is transmitted, a light transmission plate, or the like) interposed therebetween, thereby obtaining a second stacked array.

In the same manner, a predetermined number of second stacked arrays are manufactured, and are then disposed on and fixed to a glass plate at predetermined intervals (for example, 0.2 mm) in M rows × N columns (for example, four rows × four columns). Next, a mixture solution (for example, a mixture solution of barium sulfate, water, an adhesive, and a dispersant) containing a reflection material is dropped at gaps between the plurality of second stacked arrays so as to fill the gaps, in a state in which a circumference of the second stacked array group of M rows × N columns is surrounded by an enclosure with a predetermined height on the glass plate. Subsequently, the result is heated and solidified (for example, heated and dried in an oven of 50 °C for 24 hours) so as to form the light blocking layers 14. At this time, the light blocking layers 14 may be partially formed by performing dropping and filling of the mixture solution after disposing, for example, transparent plates at some of the gaps of the plurality of scintillator blocks 13. Then, the glass plate is peeled off, thereby obtaining the three-dimensional stacked scintillator 12.

<Manufacturing method 4>

First, a plurality of scintillator crystals whose surfaces are optically polished and which have a predetermined shape (for example, a rectangular solid which is 3 mm long, 3 mm wide, and 12 mm high) are prepared. Then, the interposed layers 15 (an interposed layer having a characteristic of absorbing or scattering some of light emitted by a scintillator; for example, three interposed layers at intervals of 3 mm with respect to a height of 12 mm) are generated by irradiation with a laser, thereby obtaining a second stacked array.

In the same manner, a predetermined number of second stacked arrays are manufactured, and are then disposed on and fixed to a glass plate at predetermined intervals (for example, 0.2 mm) in M rows × N columns (for example, four rows × four columns). Next, a mixture solution (for example, a mixture solution of barium sulfate, water, an adhesive, and a dispersant) containing a reflection material is dropped at gaps between the plurality of second stacked arrays so as to fill the gaps, in a state in which a circumference of the second stacked array group of M rows × N columns is surrounded by an enclosure with a predetermined height on the glass plate. Subsequently, the result is heated and solidified (for example, heated and dried in an oven of 50°C for 24 hours) so as to form the light blocking layers 14. At this time, the light blocking layers 14 may be partially formed by performing dropping and filling of the mixture solution after disposing, for example, transparent plates at some of the gaps of the plurality of second stacked arrays. Then, the glass plate is peeled off, thereby obtaining the three-dimensional stacked scintillator 12.

«Examples»

<Example 1>

In Example 1, as illustrated in FIG. 5, a radiation detector was manufactured in which the scintillator blocks 13 are stacked in the z direction. FIG. 5 is a schematic diagram of a cross-section of the radiation detector of Example 1.

The scintillator block 13 is a Ce: GAGG (Ce: $Gd_3Al_2Ga_3O_{12}$) (hereinafter, referred to as "Ce:GAGG") crystal doped with cerium. A shape thereof was a shape of a cube which is 3 mm long, 3 mm wide, and 3 mm high.

Five scintillator blocks 13 were stacked with air layers (interposed layers 15) having a thickness of 10 μm interposed therebetween in the z direction. Next, the entire outer circumference of the side surfaces of the stacked body was covered by a fluororesin film (light blocking layer 14) with a thickness of 1 mm. In addition, silicon photomultipliers (light receiving elements 10 and 11) having a light receiving surface of 3 mm × 3 mm were optically coupled to both ends of the stacked body in the z direction, thereby manufacturing the radiation detector.

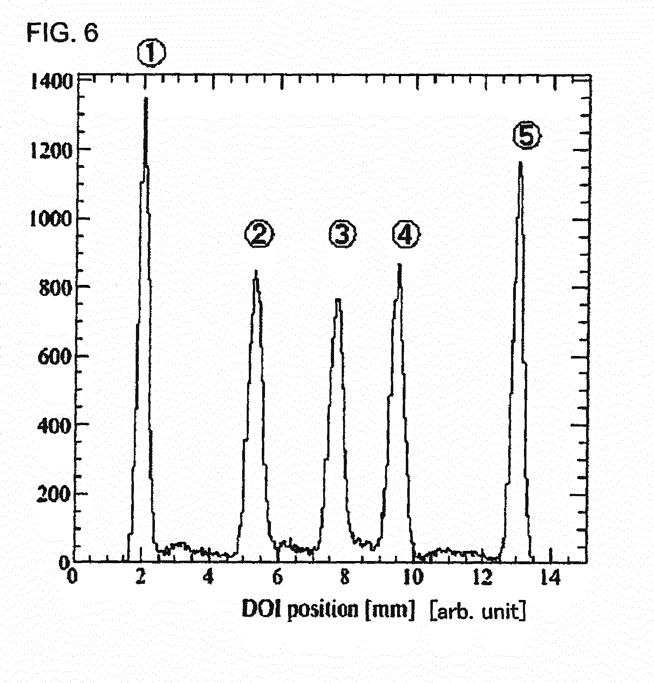

The radiation detector was irradiated with gamma rays of 662 keV from a cesium 137 radiation source, and a voltage pulse signal output from each of the silicon photomultipliers (light receiving elements 10 and 11) was analyzed by using Equation (1), thereby obtaining a position resolution spectrum illustrated in FIG. 6. A position resolution in the z direction had the performance of discriminating a position of the scintillator block 13 having a thickness of 3 mm with a resolution of FWHM=0.3 mm, and an energy resolution was 8.3%.

As described above, it can be seen that the radiation detector of the present embodiment which is obtained by arranging a plurality of radiation detectors of Example 1 in parallel has a good position resolution in a depth direction (z direction).

<Example 2>

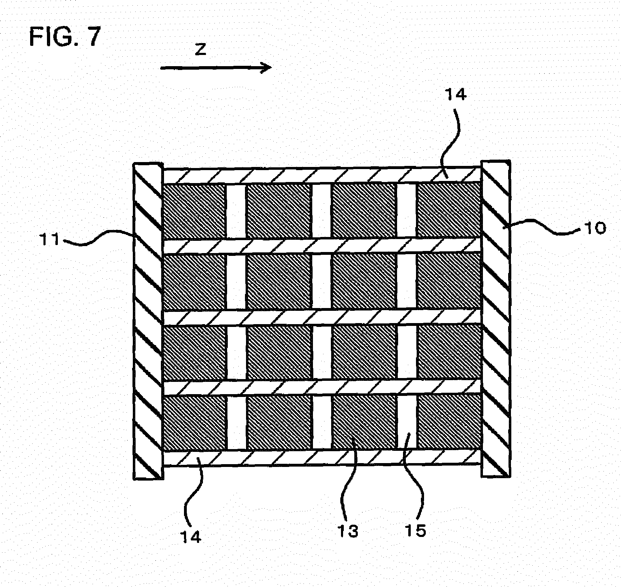

In Example 2, as illustrated in FIG. 7, a radiation detector was manufactured in which the scintillator blocks 13 were arranged in a three-dimensional manner (4 × 4 × 4). FIG. 7 is a schematic diagram of a cross-section of the radiation detector of Example 2.

The scintillator block 13 is a Ce: GAGG crystal. A shape thereof was a shape of a cube which is 3 mm long, 3 mm wide, and 3 mm high. The interposed layer 15 was an air layer with a thickness of 10 $\mu$m. The light blocking layer 14 was 0.2 mm thick, and contained barium sulfate. In addition, the light blocking layers 14 were provided on, among the scintillator block boundary surfaces, all boundary surfaces which extend in a direction parallel to the height direction H (the z direction in FIG. 7) of the three-dimensional stacked scintillator 12 (prism). In addition, the entire outer circumference of the side surfaces of the three-dimensional stacked scintillator 12 obtained through three-dimensional arrangement (4 × 4 × 4) of the scintillator blocks 13 was covered by the light blocking layer 14. Further, the light receiving elements 10 and 11 were silicon photomultipliers each having a light receiving surface of 3 mm × 3 mm.

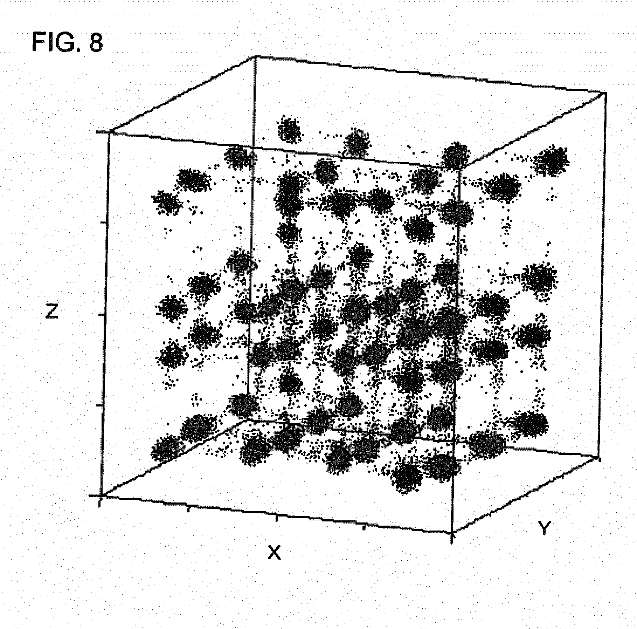

The radiation detector was irradiated with gamma rays of 662 keV from a cesium 137 radiation source. A light emitting position was specified by using the position specifying unit 16 with the configuration illustrated in FIG. 4. FIG. 8 illustrates an obtained three-dimensional map. It can be seen from FIG. 8 that three-dimensional positional information is clearly obtained. A position resolution in the depth direction (z direction) had the performance of discriminating a position of the scintillator block having a thickness of 3 mm with a resolution of FWHM=0.3 mm. In addition, an energy resolution was 8.6% at 662 keV.

<Example 3>

In Example 3, a LYSO (Ce:(Lu,Y)$_2$SiO$_5$) (hereinafter, referred to as "Ce:LYSO") crystal doped with cerium was used as the scintillator block 13. Other configurations are the same as those of the radiation detector of Example 1.

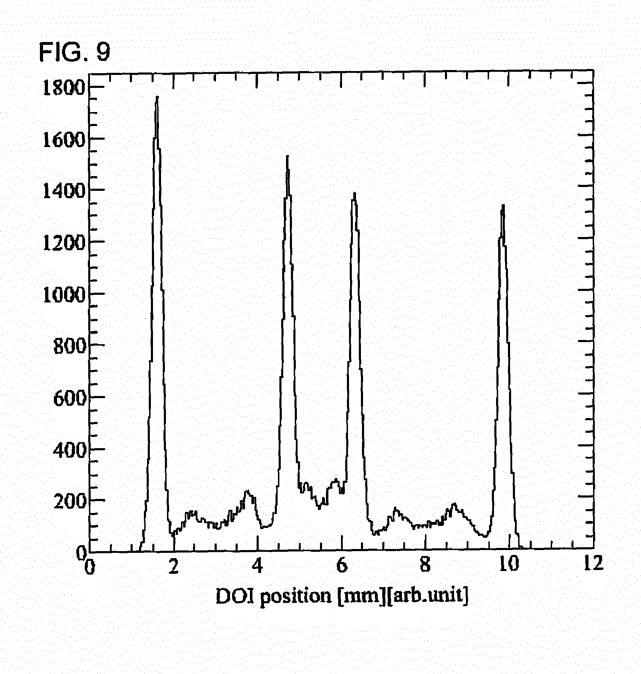

The radiation detector was irradiated with gamma rays of 662 keV from a cesium 137 radiation source, and a voltage pulse signal output from each of the silicon photomultipliers was analyzed by using Equation (1), thereby obtaining a position resolution spectrum illustrated in FIG. 9. A position resolution in the z direction had the performance of discriminating a position of the scintillator block having a thickness of 3 mm with a resolution of FWHM=0.4 mm, and an energy resolution was 11.3%.

As described above, it can be seen that the radiation detector of the present embodiment which is obtained by arranging a plurality of radiation detectors of Example 3 in parallel has a good position resolution in a depth direction (z direction).

<Example 4>

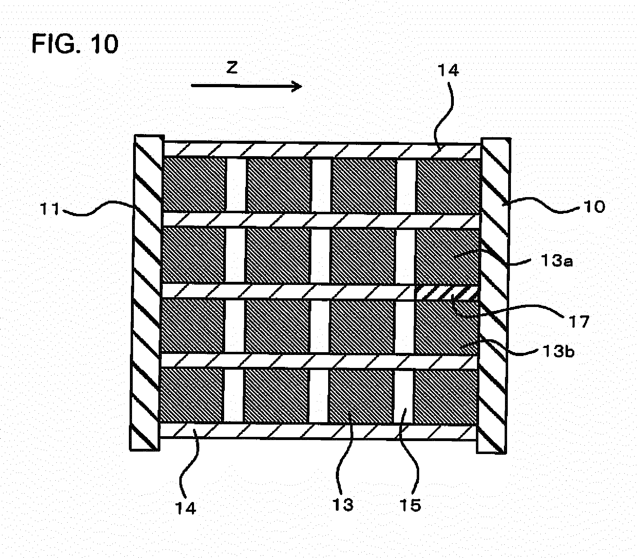

FIG. 10 is a schematic diagram of a cross-section of the radiation detector of Example 4. In Example 4, the light blocking layer 14 was provided on some boundary surfaces which extend in a direction parallel to the height direction H (the z direction in FIG. 10) of the three-dimensional stacked scintillator 12 (prism). Other configurations are the same as those of the radiation detector of Example 2. In addition, a light transmission plate 17 was disposed on boundary surfaces on which the light blocking layer 14 was not provided. The light transmission plate 17 was provided only between scintillator blocks 13a and 13b as illustrated in FIG. 10.

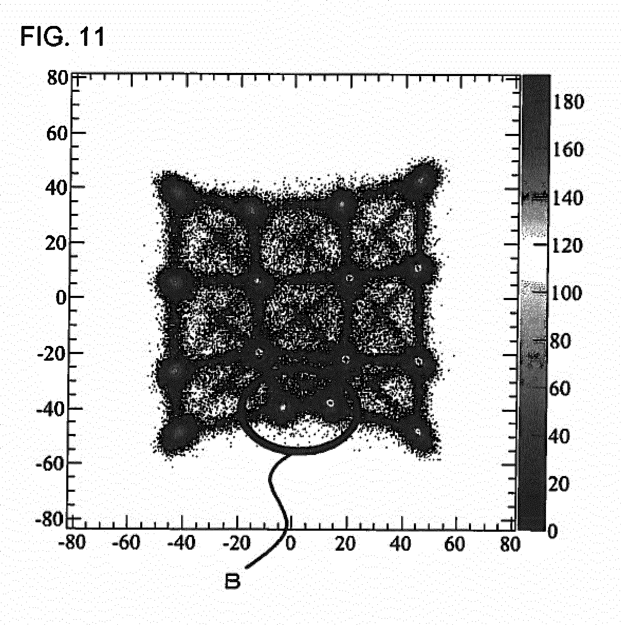

The radiation detector was irradiated with gamma rays of 662 keV from a cesium 137 radiation source. A light emitting position was specified by using the position specifying unit 16 with the configuration illustrated in FIG. 4. FIG. 11 illustrates an obtained two-dimensional map. It can be seen from FIG. 11 that the map is distorted in relation to light emitting position information (refer to B in FIG. 11) of light emitted from the scintillator blocks 13a and 13b with the light transmission plate 17 interposed therebetween, and a position resolution characteristic in the x and y directions deteriorates. However, it can be seen that light emitting position information of light emitted from the other scintillator blocks 13 is clearly obtained. In other words, it can be seen that an influence of the light transmission plate 17 disposed between the scintillator blocks 13a and 13b is restricted only to the vicinity thereof, and light emitting position information is clearly obtained in the other regions.

<Comparative Example 1>

In Comparative Example 1, a radiation detector was manufactured in which scintillator blocks were arranged in a three-dimensional manner (4 × 4 × 4). The scintillator block 13 is a Ce: GAGG crystal. An interposed layer which is formed by a silicon-based adhesive through which scintillator light is transmitted and which is 100 $\mu$m thick was provided on all scintillator block boundary surfaces. In addition, the entire side surfaces of a three-dimensional stacked scintillator obtained through three-dimensional arrangement (4x4x4) of the scintillator blocks 13 was covered by a light blocking layer. Further, the light receiving elements were silicon photomultipliers each having a light receiving surface of 3 mm × 3 mm.

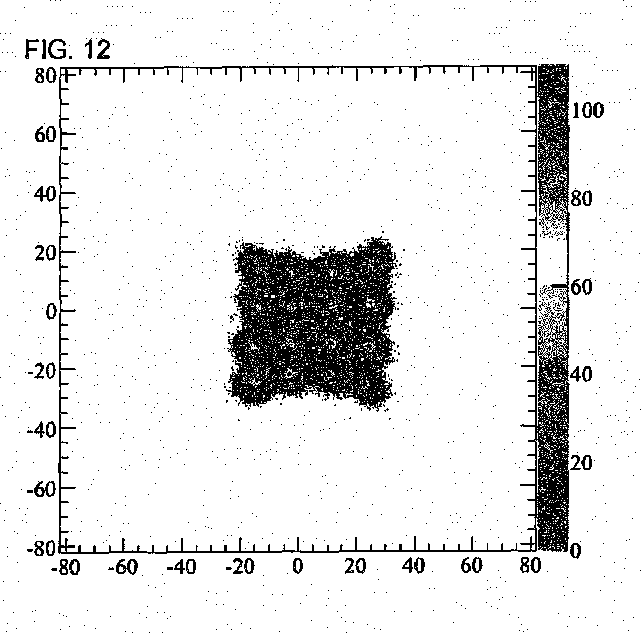

The radiation detector was irradiated with gamma rays of 662 keV from a cesium 137 radiation source, and a voltage pulse signal output from each of the silicon photomultipliers was analyzed by using Equation (1). FIG. 12 illustrates an obtained two-dimensional map. A position resolution spectrum in the × and y directions is distorted toward the center as compared with the three-dimensional map of FIG. 11 obtained in Example 4, and thus a position discrimination characteristic deteriorates.

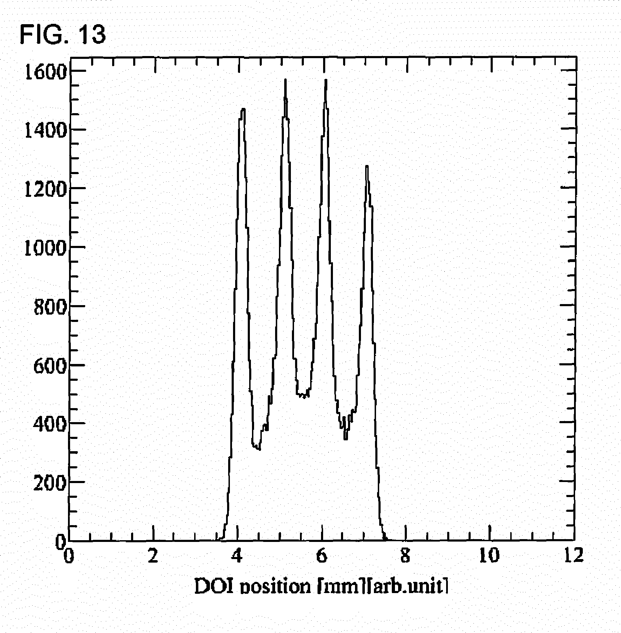

FIG. 13 illustrates a position resolution spectrum in the depth direction (z direction), obtained in Comparative Example 1. It can be seen that adjacent position resolution spectra are closer to each other than in the spectrum of FIG. 9, obtained in Example 3, and thus a position resolution characteristic deteriorates.

<Comparative Example 2>

In Comparative Example 2, a radiation detector was manufactured in which scintillator blocks were arranged in a three-dimensional manner (4 × 4 × 4). The scintillator block 13 is a Ce: GAGG crystal. An air layer which is 10 $\mu$m thick was provided on all scintillator block boundary surfaces as an interposed layer. In addition, all of the side surfaces of a three-dimensional stacked scintillator obtained through three-dimensional arrangement (4 × 4 × 4) of the scintillator blocks 13 was covered by a light blocking layer. Further, the light receiving elements were silicon photomultipliers each having a light receiving surface of 3 mm × 3 mm.

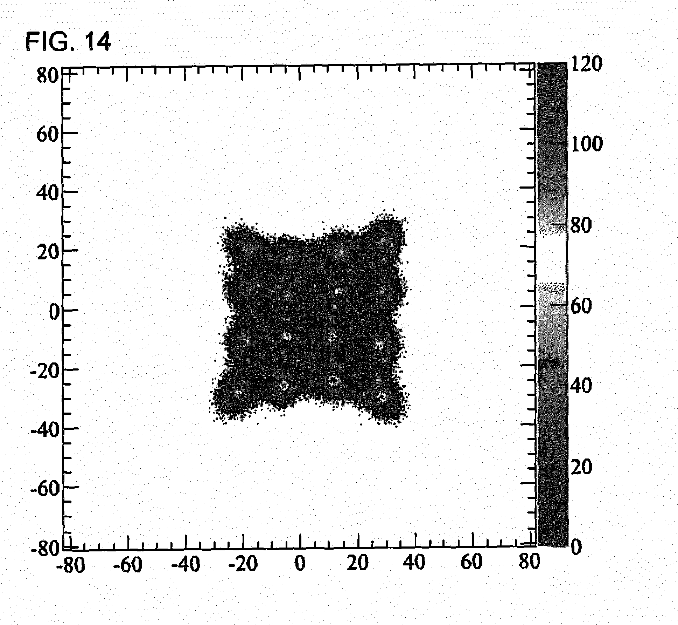

The radiation detector was irradiated with gamma rays of 662 keV from a cesium 137 radiation source, and a voltage pulse signal output from each of the silicon photomultipliers was analyzed by using Equation (1). FIG. 14 illustrates an obtained two-dimensional map. A position resolution spectrum is distorted toward the center as compared with the two-dimensional map of FIG. 11 obtained in Example 4, and thus a position discrimination characteristic deteriorates.

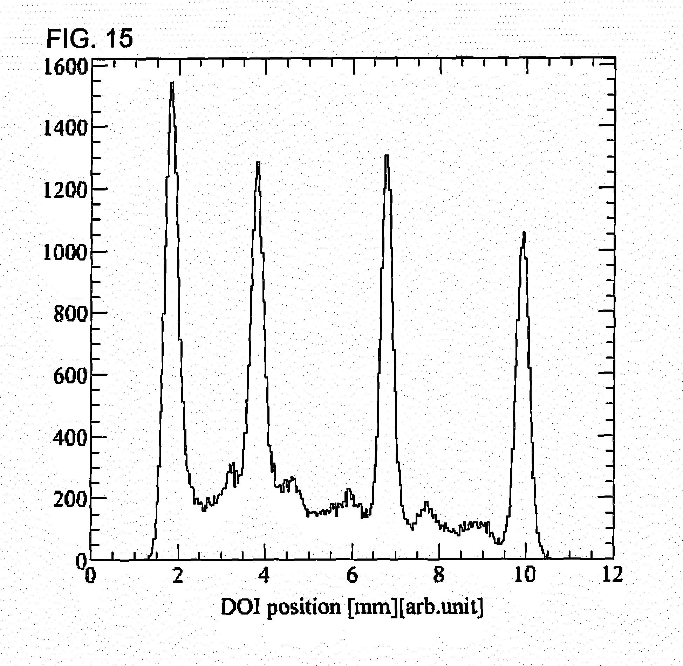

FIG. 15 illustrates a position resolution spectrum in the depth direction (z direction), obtained in Comparative Example 2.

When "distance between peaks/FWHM" which is an index of a position resolution and "maximal count value of peaks/count value of valleys between peaks" which is an index of an S/N ratio of the position resolution are compared between Comparative Examples 1 and 2 and Example 3, it leads to a position resolution characteristic in the depth direction (z direction) of Table 1.

[Table 1]

|  | DISTANCE BETWEEN PEAKS/FWHM | MAXIMAL COUNT VALUE OF PEAKS/COUNT VALUE OF VALLEYS BETWEEN PEAKS |
|---|---|---|
| EXAMPLE 3 | 3.73 | 7.95 |
| COMPARATIVE EXAMPLE 1 | 1.53 | 2.85 |
| COMPARATIVE EXAMPLE 2 | 3.65 | 17.22 |

In relation to the "distance between peaks/FWHM" characteristic, the greater the value thereof, the better the position discrimination performance, but the value in Comparative Example 1 is 1.53, which is small. Generally, in a case where the value is equal to or less than 2, a position resolution performance is not good, and thus cannot be used in an image apparatus such as PET. In addition, in relation to "maximal count value of peaks/count value of valleys between peaks", the greater the value thereof, the better the position discrimination performance and thus the better the S/N ratio, but the value in Comparative Example 1 is 2.85, which is small. Since an S/N ratio is low, about 1/3 of all count values cannot be used when position discrimination is performed, and thus sensitivity of a detector deteriorates in a case of being used as a radiation detector. The position resolution in the depth direction (z direction) of Comparative Example 2 is higher than that of Comparative Example 1, but the position resolution spectrum in the x and y directions is distorted toward the center, and thus a position discrimination characteristic deteriorates. In Comparative Examples 1 and 2, the boundary surface of the scintillator blocks in the x and y directions serves as not a light blocking layer but an interposed layer through which scintillation light is transmitted. Therefore, the scintillator light generated by the scintillator blocks spreads in a three-dimensional manner not only in the z direction but also in the x and y directions. For this reason, the position resolution is considered to deteriorate as a result.

As mentioned above, according to the radiation detector of the present invention, it is possible to obtain accurate information on radiation which is incident from the scintillator layer optically coupled to the light receiving elements, and it is possible to achieve a radiation detector provided with a three-dimensional position detection function having a high accuracy position resolution. Since it is not necessary to use different types of scintillator elements having different fluorescence lifespans or a complex three-dimensional array in which a reflection material and a light transmission plate are combined, unlike in a method of the related art, it becomes easier to produce a three-dimensional array in which stacked scintillators are combined, and there is no concern that an energy resolution deteriorates.

The three-dimensional position recognition type radiation detector of the present invention has a configuration in which the light receiving elements are combined with both upper and lower surfaces of the three-dimensional array, and does not have a configuration in which light receiving elements are combined with six surfaces of a cube array, unlike in a method of the related art. Therefore, detectors can be easily connected to each other in a shape such as a plate shape or a ring shape. If the radiation detector is used in positron emission tomography (PET), it is possible to acquire radiation reaction positional information with a simple circuit configuration.

In addition, as disclosed in Non-Patent Document 1, a position resolution in the related art is about 1 mm. In contrast, as described in Examples, according to the present invention, it is possible to realize a resolution of about 0.3 mm in principle by reducing a thickness of the scintillator block. In addition, according to the present invention, since a side surface of the z-direction stacked unit is covered by a light blocking layer or a light blocking layer having a reflection function, dispersion of light does not occur in the x and y directions, and light efficiently reaches a light receiving element. Therefore, a light emitting amount can be increased, and thus an energy resolution can also be increased.

As mentioned above, according to the present invention, a radiation detector is provided which realizes a higher position resolution in a scintillator depth direction and plane direction than in the related art, with a relatively simple structure.

This application is based upon and claims the benefit of priority from Japanese Patent Application No. 2011-289480, filed December 28, 2011; the entire contents of which are incorporated herein by reference.

**Claims**

1. A radiation detector comprising:

    a three-dimensional stacked scintillator that includes a plurality of scintillator blocks arranged in a matrix in a three-dimensional manner so as to form a prism, in which interposed layers which have a refractive index different from a refractive index of the scintillator blocks and/or have a characteristic of absorbing or scattering some of light emitted by the scintillator blocks are disposed on, out of boundary surfaces between the plurality of scintillator blocks, the boundary surfaces extending in a direction perpendicular to a height direction of the prism, and light blocking layers which block transmission of light emitted by the scintillator blocks are disposed on at least some of the boundary surfaces extending in a direction parallel to the height direction of the prism; and light receiving elements that are provided so as to form a pair on both end surfaces of the prism of the three-dimensional stacked scintillator in the height direction, and receive light emitted by the scintillator blocks so as to convert the light into electrical signals.

2. The radiation detector according to claim 1,
    wherein, in the three-dimensional stacked scintillator, the light blocking layers are disposed on all of the boundary surfaces extending in the direction parallel to the height direction of the prism.

3. The radiation detector according to claim 1 or 2,
    wherein, in the three-dimensional stacked scintillator, the plurality of scintillator blocks include a plurality of stacked units that are arranged linearly in the height direction of the prism.

4. The radiation detector according to any one of claims 1 to 3,
    wherein the light blocking layer has a function of reflecting light emitted by the scintillator block.

5. The radiation detector according to any one of claims 1 to 4, further comprising:

    a position specifying unit that receives the electrical signals from the two light receiving elements forming a pair, and specifies a position where the light which provides a basis of the electrical signals has been emitted, on the basis of the received electrical signals.

FIG. 1

FIG. 2

FIG. 3

13

15a

H

FIG. 4

10
LIGHT
RECEIVING
ELEMENT

22
CENTROID
OPERATION
CIRCUIT

24
DISCRIMI-
NATOR

26
AND
CIRCUIT

27
DELAY
CIRCUIT

29
ADC Gate

30
ADC

25
DISCRIMI-
NATOR

23
CENTROID
OPERATION
CIRCUIT

11
LIGHT
RECEIVING
ELEMENT

28
DELAY
CIRCUIT

POSITION SPECIFYING UNIT ~16

FIG. 5

Z

11    14    14    13    15    10

FIG. 6

DOI position [mm] [arb. unit]

FIG. 7

FIG. 8

FIG. 9

FIG. 10

FIG. 11

FIG. 12

FIG. 13

FIG. 14

FIG. 15

DOI position [mm][arb.unit]

## INTERNATIONAL SEARCH REPORT

| | International application No. |
|---|---|
| | PCT/JP2012/008129 |

**A. CLASSIFICATION OF SUBJECT MATTER**
*G01T1/20*(2006.01)i, *G01T1/161*(2006.01)n

According to International Patent Classification (IPC) or to both national classification and IPC

**B. FIELDS SEARCHED**

Minimum documentation searched (classification system followed by classification symbols)
G01T1/20, G01T1/161

Documentation searched other than minimum documentation to the extent that such documents are included in the fields searched

| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2005-533245 A (European Organization for Nuclear Research), 04 November 2005 (04.11.2005), paragraphs [0021], [0034]; fig. 1<br>& US 2005/0253073 A1 & EP 1521982 A<br>& WO 2004/008177 A1 & CA 2492587 A<br>& NO 20050779 A & AU 2002331266 A | 1-3,5<br>4 |
| Y | JP 2010-101682 A (Toshiba Corp.), 06 May 2010 (06.05.2010), paragraph [0017]; Best Mode for carrying out the Invention; fig. 3 to 5 (Family: none) | 4 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 March, 2013 (18.03.13) | 26 March, 2013 (26.03.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/008129

C (Continuation).   DOCUMENTS CONSIDERED TO BE RELEVANT

| Category* | Citation of document, with indication, where appropriate, of the relevant passages | Relevant to claim No. |
|---|---|---|
| A | JP 63-75587 A  (Hamamatsu Photonics Kabushiki Kaisha), 05 April 1988 (05.04.1988), entire text; fig. 1, 2 & US 4823016 A        & GB 2198620 A & GB 8721895 A0 | 1-5 |
| A | JP 2010-139383 A  (Hamamatsu Photonics Kabushiki Kaisha), 24 June 2010 (24.06.2010), entire text; all drawings & WO 2010/067631 A1 | 1-5 |
| A | WO 2011/121707 A1  (Hamamatsu Photonics Kabushiki Kaisha), 06 October 2011 (06.10.2011), paragraph [0002]; fig. 2(b) (Family: none) | 1-5 |
| P,A | WO 2012/105292 A1  (Hamamatsu Photonics Kabushiki Kaisha), 09 August 2012 (09.08.2012), entire text; all drawings (Family: none) | 1-5 |
| A | JP 5-18390 B1  (Hamamatsu Photonics Kabushiki Kaisha), 11 March 1993 (11.03.1993), entire text; all drawings & US 4870280 A          & GB 2200205 A & GB 8728846 A0 | 1-5 |
| A | US 2005/0006589 A1  (Joung Jinhun), 13 January 2005 (13.01.2005), entire text; all drawings (Family: none) | 1-5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H111999142523 B
- JP 2011149883 A
- JP 2009031132 A
- JP S63198847686 B
- JP H5199375990 B
- JP 2003021682 A
- JP 2004279057 A
- JP 2011289480 A

**Non-patent literature cited in the description**

- Development of three-dimensional radiation detector for realizing PET resolution approaching theoretical limit. *National Institute of Radiological Sciences,* 07 December 2011, http://www.nirs.go.jp/information/press/2011/10_05.shtml